# EUROPÄISCHE PATENTSCHRIFT

(11) **EP 0 543 830 B1**
(45) Veröffentlichungstag und Bekanntmachung des Hinweises auf die Patenterteilung: **13.04.1994**
(21) Anmeldenummer: 91912941.1
(22) Anmeldetag: 23.07.1991
(51) Int. Cl.: B23K 26/00, B23K 26/14

(54) **VORRICHTUNG UND VERFAHREN ZUM LASERSCHWEISSEN EINES ROHRES**
DEVICE AND PROCESS FOR LASER-WELDING PIPES
DISPOSITIF ET PROCEDE POUR LE SOUDAGE PAR LASER D'UN TUBE

(30) Priorität: 17.08.1990 DE 9011959 U; 13.05.1991 DE 4115562
(43) Veröffentlichungstag der Anmeldung: 02.06.1993
(73) Patentinhaber: SIEMENS AKTIENGESELLSCHAFT, 80333 München (DE)
(72) Erfinder: KRÖHNERT, Gerhard, D-2361 Todesfelde (DE)
(86) Internationale Anmeldenummer: DE9100597
(87) Internationale Veröffentlichungsnummer: WO9203248

(56) Entgegenhaltungen:
- EP-A- 300 458
- EP-A- 418 170
- DE-U- 9 011 959

## Beschreibung

Die Erfindung bezieht sich auf eine Vorrichtung und ein Verfahren zum Laserschweißen eines Rohres entlang seinem Innenumfang mit einer in das Rohr einführbaren Sonde.

Eine Vorrichtung zum Laserschweißen eines Rohres mit einer in das Rohr einführbaren Sonde ist beispielsweise aus der EP-A1-0 300 458 bekannt. Die dort offenbarte Sonde ist über einen Lichtwellenleiter mit einem Nd:YAG-Festkörperlaser verbunden. Das innerhalb der Sonde aus einem Ende des Lichtwellenleiters austretende Laserlicht wird durch ein aus mehreren Linsen bestehendes Linsensystem und einen Umlenkspiegel auf einen außerhalb der Sonde liegenden Brennpunkt fokussiert. Der Umlenkspiegel ist unter einem Winkel von 45° gegen die Längsachse der Sonde geneigt und lenkt den durch das Linsensystem fokussierten und sich innerhalb der Sonde zwischen dem Linsensystem und dem Umlenkspiegel ausbreitenden Laserstrahl um 90° um. Der umgelenkte Laserstrahl verläßt die Sonde durch eine im Gehäuse der Sonde radial angeordnete zylindrische Austrittsöffnung. Die auf die Innenoberfläche des zu schweißenden Rohres fokussierten Laserstrahlen treffen somit unmittelbar gegenüber der Austrittsöffnung im Mittel senkrecht auf die Innenoberfläche auf.

Bei dieser bekannten Vorrichtung wird somit ein wesentlicher Anteil des auf die Innenoberfläche des Rohres auftreffenden Laserlichtbündels in sich selbst und somit in das Innere der Sonde zurückreflektiert. Dies führt zu einer zusätzlichen thermischen Belastung der innerhalb der Sonde angeordneten optischen Komponenten. Da sich die Austrittsöffnung für den Laserstrahl unmittelbar gegenüber dem Schweißort befindet, können sich Schweißdampf oder Schweißplasma und insbesondere bei Verwendung eines gepulsten Lasers aus der Schmelze ausgelöste Tropfen auf dem Umlenkspiegel und an der Austrittsöffnung niederschlagen und die Lebensdauer der Sonde wesentlich verkürzen.

Der Erfindung liegen nun die Aufgaben zugrunde, eine Vorrichtung und ein Verfahren zum Laserschweißen eines Rohrs entlang seinem Innenumfang mit einer in das Rohr einführbaren Sonde anzugeben, mit denen eine thermische Belastung der in der Sonde angeordneten optischen Komponenten und ein Niederschlag von Schweißdampf auf dem Umlenkspiegel und im Bereich der Austrittsöffnung weitgehend verringert sind.

Die genannten Aufgaben werden gemäß der Erfindung jeweils mit den Merkmalen des Anspruches 1 bzw. 16 gelöst. Da zum Fokussieren und Umlenken eines sich innerhalb der Sonde im wesentlichen entlang ihrer Längsachse ausbreitenden Laserstrahlbündels wenigstens ein Abbildungselement vorgesehen ist, das ein in einem außerhalb der Sonde liegenden Brennpunkt fokussiertes Laserstrahlbündel erzeugt, dessen Ausbreitungsrichtung schräg zur Längsachse orientiert ist, ist eine Zurückreflexion der auf die Schweißstelle auftreffenden Laserstrahlen in das Innere der Sonde praktisch vermieden. Als Abbildungselemente sind dabei optische Komponenten zu verstehen, mit denen die Ausbreitungsrichtung eines Laserstrahles geändert werden kann, beispielsweise Planspiegel, Konkavspiegel oder Linsen. Die von der Innenoberfläche des Rohres reflektierten Laserstrahlen treffen nach ihrer Reflexion lediglich auf den Außenmantel der Sonde, der unempfindlicher gegenüber thermischen Belastungen ist. Durch die schräge Auskopplung des umgelenkten Laserstrahlbündels wird außerdem vermieden, daß sich die Austrittsöffnung unmittelbar gegenüber dem Schweißort befinden muß, so daß der Niederschlag von Schweißdampf im Bereich der Austrittsöffnung und auf den Abbildungselementen verringert ist.

In einer bevorzugten Ausführungsform ist ein Abbildungselement vorgesehen, das ein schräg nach vorne zum Sondenkopf hin umgelenktes Laserstrahlbündel erzeugt.

Der Neigungswinkel des umgelenkten Laserstrahls gegen die Längsachse der Sonde beträgt vorzugsweise zwischen 60° und 80°. Dadurch ist gewährleistet, daß auch bei einer großen Austrittsöffnung für das Laserlicht ein Zurückreflektieren des Laserlichtes in das Innere der Sonde praktisch vermieden ist.

In einer bevorzugten Ausgestaltung der Erfindung ist in der Sonde zum Umlenken des fokussierten Laserstrahles ein Umlenkspiegel mit ebener Spiegelfläche vorgesehen, deren Oberflächennormale gegen die Längsachse der Sonde einen Winkel einschließt, der größer als 45° ist, vorzugsweise zwischen 50° und 60° beträgt.

In einer weiteren Ausgestaltung der Erfindung ist ein konkaver Umlenkspiegel vorgesehen, der sowohl zur Fokussierung als auch zum Umlenken der sich im Mittel entlang der Längsachse der Sonde ausbreitenden Laserstrahlen vorgesehen ist. Dadurch ist der Querschnitt des auf den Umlenkspiegel auftreffenden Laserstrahlenbündels gegenüber der Ausführungsform mit einem ebenen Umlenkspiegel vergrößert. Die pro Flächeneinheit auf dem Umlenkspiegel auftreffende Strahlungsleistung und somit auch die lokale Aufheizung des Umlenkspiegels sind dadurch reduziert.

In einer weiteren bevorzugten Ausführungsform sind zur Verbesserung der Abbildungseigenschaften des Abbildungssystems bei einer über einen Lichtwellenleiter mit einem Laser optisch gekoppelten Sonde zwischen dem Ende des Lichtwellenleiters und dem konkaven Umlenkspiegel Mittel zum Kollimieren des aus dem Lichtwellenleiter austretenden Laserstrahlbündels vorgesehen.

Insbesondere ist ein Umlenkspiegel aus einem Werkstoff mit hoher Wärmeleitfähigkeit, vorzugsweise Kupfer Cu, vorgesehen.

Durch diese Maßnahme wird die thermische Belastung des Umlenkspiegels weiter verringert und somit die Haltbarkeit der Reflektorschicht zusätzlich erhöht.

In einer bevorzugten Ausführungsform ist zum Auskoppeln des umgelenkten Laserstrahlbündels aus der Sonde eine Austrittsöffnung vorgesehen, die einem aus ihr ausströmenden Schutzgasstrom eine axial gerichtete Strömungskomponente erteilt.

Ein Niederschlag von verdampfendem Schweißgut auf dem Umlenkspiegel wird in einer weiteren Ausgestaltung der Erfindung dadurch zusätzlich verringert, daß Mittel vorgesehen sind, mit denen von einem sich innerhalb der Sonde ausbreitenden Schutzgasstrom an der Austrittsöffnung ein Teilgasstrom abgezweigt und durch innerhalb der Sonde liegende Kanäle geführt wird.

Insbesondere ist vorgesehen, daß die Kanäle in eine Ausnehmung des Umlenkspiegels münden, die sich unmittelbar gegenüber der Austrittsöffnung befindet.

In einer weiteren vorteilhaften Ausgestaltung der Erfindung sind außerdem in der Sonde Strömungskanäle vorgesehen, mit denen ein Teil des innerhalb der Sonde in Richtung zum Umlenkspiegel strömenden Schutzgases vor Erreichen des Umlenkspiegels abgezweigt und mit einer axialen Strömungskomponente zur Außenoberfläche der Sonde geführt wird. Dadurch ergibt sich zwischen der Sonde und dem Rohr ein axialer Schutzgasstrom der das Niederschlagen von Schweißdampf auf die Sonde und auf den Umlenkspiegel zusätzlich verringert. In einer bevorzugten Ausführungsform sind Mittel zur Einstellung des Mengenverhältnisses der beiden Teilgasströme vorgesehen.

Bei einem Verfahren zum Laserschweißen eines Rohres entlang seinem Innenumfang mit einer in das Rohr einführbaren Sonde wird ein sich innerhalb der Sonde im wesentlichen entlang ihrer Längsachse ausbreitendes Laserstrahlbündel schräg zur Längsachse der Sonde umgelenkt und auf eine Stelle am Innenumfang des Rohres fokussiert.

Insbesondere wird der Schweißort mit einem Schutzgasstrom beaufschlägt, der eine axiale, von einer Austrittsöffnung für das umgelenkte und fokussierte Laserstrahlbündel weggerichtete Strömungskomponente aufweist.

In einer weiteren bevorzugten Ausgestaltung des Verfahrens wird ein Teil eines innerhalb der Sonde zur Austrittsöffnung strömenden Schutzgases vor Erreichen der Austrittsöffnung abgezweigt und mit einer axialen Strömungskomponente in den zwischen dem Rohr und der Sonde befindlichen Zwischenraum geleitet.

Eine zusätzliche Verringerung von Schweißgut-Niederschlag auf dem Umlenkspiegel wird dadurch erreicht, daß von dem sich innerhalb der Sonde zur Austrittsöffnung strömenden Schutzgas innerhalb der Sonde an der Austrittsöffnung ein weiterer Teilgasstrom mit einer axial gerichteten Strömungskomponente abgezweigt wird.

In einer weiteren vorteilhaften Ausgestaltung des Verfahrens ist die Verwendung eines im cw-Betrieb arbeitenden Festkörperlasers vorgesehen. Dadurch wird ein Auslösen von Tropfen aus der Schweißschmelze vermieden.

Zur weiteren Erläuterung der Erfindung wird auf die Ausführungsbeispiele der Zeichnung verwiesen, in deren
Figur 1 eine in das Rohr eingeführte Sonde gemäß der Erfindung in einem Längsschnitt veranschaulicht ist. In
Figuren 2, 3 und 4 zeigen jeweils in einem vergrößerten Ausschnitt vorteilhafte Ausgestaltungen der Sonde im Bereich der Umlenkeinrichtung.

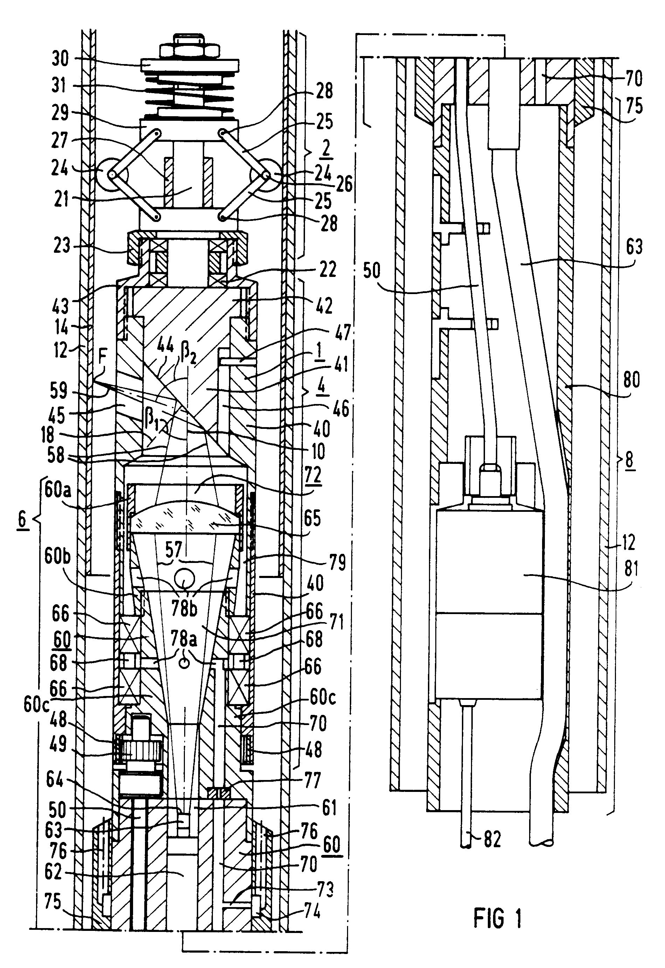

Entsprechend **FIG 1** enthält eine Sonde 1 gemäß der Erfindung eine Zentriereinheit 2, eine Umlenkeinheit 4, eine Fokussiereinheit 6 sowie eine Antriebseinheit 8, die hintereinander entlang einer Längsachse 10 der Sonde 1 angeordnet sind. Die Sonde 1 ist in ein zu bearbeitendes Rohr 12 eingeführt und ragt mit ihrem die Umlenkeinheit 4 enthaltenden Kopfteil in das Innere eines in das Rohr 12 eingefügten Sleeverohres 14, das mit dem Rohr 12 verschweißt werden soll.

Die Zentriereinheit 2 umfaßt eine Welle 21, die am kopfseitigen Ende der Sonde 1 über Kugellager 22 drehbar auf der Umlenkeinheit 4 gelagert und mit einer Überwurfmutter 23 in axialer Richtung fixiert ist. Die Zentriereinheit enthält wenigstens drei Rollen 24, von denen nur zwei in der Figur dargestellt sind, und die jeweils federnd über ein Drehgelenkgetriebe mit zwei Gliedern 25 gelagert sind. Die beiden Glieder 25 bilden das Schenkelpaar eines gleichschenkligen Dreiecks und berühren sich in einem die Rolle 24 aufnehmenden Drehgelenk 26. Auf der Welle 21 sind die beiden Glieder 25 ebenfalls über Drehgelenke 28 verschiebbar gelagert sind. Eines dieser beiden Drehgelenke 28 ist kraftschlüssig an einen beweglichen Flansch 29 gekoppelt, der die Welle 21 umgibt. An der Welle 21 ist an ihrem freien Ende ein weiterer Flansch 30 befestigt. Zwischen dem Flansch 29 und dem Flansch 30 ist eine Spiralfeder 31 angeordnet, so daß eine radial nach innen gerichtete Bewegung der Rolle 26 gegen die Wirkung dieser Spiralfeder 31 erfolgt. Eine auf der Welle 21 angeordnete Distanzhülse 27 verhindert das Zusammenklappen des Drehgelenkes 26 und erleichtert das Einführen der Sonde 1 in das Rohr 12.

Die Umlenkeinheit 4 umfaßt ein zylindrisches Gehäuse 40, in dem ein Umlenkspiegel 41 angeordnet ist. Der Umlenkspiegel 41 besteht aus einem massiven zylindrischen Kupferblock, der an seinem der Zentriereinheit 2 zugewandten Ende eine flanschartige Erweiterung 42 hat, die zur axialen Fixierung des Umlenkspiegels 41 mit einer Überwurfmutter 43 dient. Der Kupferblock ist an seinem von der flanschartigen Erweiterung 42 abgewandten Ende mit einer schräg zu seiner Längsachse orientierten Stirnfläche versehen. Diese Stirnfläche ist mit einem spiegelnden Überzug beschichtet und bildet eine Spiegelfläche 44. Als spiegelnder Überzug ist beispielsweise eine dielektrische Schicht, vorzugsweise Titannitrid TiN, oder eine metallische Schicht, vorzugsweise aufgedampftes Gold Au, vorgesehen. Die reflektierende Schicht kann zusätzlich noch mit einer Schutzschicht aus Quarz versehen sein.

Die Spiegelfläche 44 ist innerhalb der Sonde 1 derart angeordnet, daß ihre Normale 18 mit der Längsachse 10 der Sonde einen Winkel β1 einschließt, der größer als 45° ist, vorzugsweise zwischen 50° und 60° beträgt. Ein sich im Mittel entlang der Längsachse 10 ausbreitendes und auf die Spiegelfläche 44 auftreffendes Laserstrahlbündel 58 wird somit schräg nach vorne umgelenkt. Der Mittenstrahl des umgelenkten Laserstrahlbündels 59 tritt gegenüber der Längsachse 10 unter einem Winkel β2 zwischen 60° und 80° aus dem Gehäuse 40 durch eine Austrittsöffnung 45 aus. Im Beispiel der Figur ist als Austrittsöffnung 45 eine ebenfalls schräg zur Längsachse 10 verlaufende Bohrung vorgesehen.

Der Umlenkspiegel 41 ist außerdem durch eine parallel zu seiner Längsrichtung 10 verlaufenden Nut 46 sowie einen Paßstift 47 gegen ein Verdrehen im Gehäuse 40 gesichert.

Durch die Verwendung eines massiven Kupferblockes als Umlenkspiegel 41 wird die Aufheizung der Spiegelfläche durch den Laserstrahl 58 verringert und die Lebensdauer der Verspiegelung erhöht.

Das Gehäuse 40 der Umlenkeinheit 4 ist an seinem vom Umlenkspiegel 41 abgewandten Ende am Innenumfang mit einem Zahnkranz 48 versehen, in den ein von der Antriebseinheit 8 aus angetriebenes Ritzel 49 eingreift. Dieses Ritzel 49 ist drehmomentschlüssig mit einer biegsamen Welle 50 verbunden, die an die Antriebswelle eines in der Antriebseinheit 8 angeordneten Elektromotors 81 gekoppelt ist. Über das vom Elektromotor 81 angetriebene Ritzel 49 wird das Gehäuse 40 in eine Drehbewegung versetzt, so das die Stelle F, an der das austretende Laserstrahlbündel 59 auf dem Innenmantel des zu schweißenden Sleeverohres 14 auftrifft, in Umfangsrichtung bewegt wird und eine Kreisbahn beschreibt.

Zwischen der Umlenkreinheit 4 und der Antriebseinheit 8 ist die Fokussiereinheit 6 angeordnet, deren Gehäuse 60 starr mit dem Gehäuse 80 der Antriebseinheit 8 verbunden ist. Das Gehäuse 60 enthält eine zentrale Bohrung 61, in die auf der der Antriebseinheit 8 zugewandten Seite eine Hülse 62 zur Aufnahme eines Lichtwellenleiters 63 eingelegt ist. Der Lichtwellenleiter 63 mündet mit seinem freien Ende 64 in der Bohrung 61 und wird durch die Hülse 62 axial zentriert. Mit seinem anderen Ende ist der Lichtwellenleiter 63 an einen in der Figur nicht dargestellten Laser, vorzugsweise ein Festkörperlaser, insbesondere ein Nd:YAG-Festkörperlaser, gekoppelt.

Am dem Umlenkspiegel 41 zugewandten Ende der Fokussiereinheit 6 ist ein Fokussierelement, vorzugsweise eine Linse 65 oder ein Linsensystem, angeordnet, die ein aus dem Ende 64 des Lichtwellenleiters 63 austretendes divergentes Laserstrahlbündel 57 fokussiert. Die Lage des Fokus F des Laserstrahlbündels 59 kann durch die Veränderung des Abstandes zwischen dem Ende 64 und der Linse 65 justiert werden.

Das Gehäuse 40 umgreift das Gehäuse 60 im Bereich der Linse 65 und ist über Kugellager 66 und Distanzhülsen 68 auf dem Gehäuse 60 drehbar gelagert und mit ihm axial kraftschlüssig verbunden. Durch die Drehung des Ritzels 49 wird somit nur das die Umlenkeinheit 41 tragende Gehäuse 40 in Drehbewegung versetzt. Die Linse 65 und der Lichtwellenleiter 63 nehmen an dieser Drehbewegung nicht teil.

Die Linse 65 wird von mehreren kraftschlüssig miteinander verbundenen und nicht rotierenden Gehäuseteilen 60a, 60b, 60c getragen, die in das Innere des Gehäuses 40 hineinragen. Die Gehäuseteile 60b und 60c bilden einen annähernd V-förmigen Zwischenraum 71, der über Bohrungen 78a mit einem im Gehäuseteil 60c angeordneten Strömungskanal 70 verbunden ist. Dieser Strömungskanal 70 führt Schutzgas, beispielsweise Argon, in den zwischen Linse 65 und dem freien Ende 64 des Lichtwellenleiters 63 befindlichen Zwischenraum 71. Im Strömungskanal 70 ist eine querschnittsverengende Reduzierdüse 77 eingelegt. Das im Strömungskanal 70 oberhalb der Reduzierdüse 77 strömende Schutzgas tritt über die Bohrungen 78a in den Zwischenraum 71 ein, verläßt über weitere Bohrungen 78b im Gehäuseteil 60b den Zwischenraum 71, tritt in einen Ringkanal 79 aus und gelangt von dort in den zwischen Linse 65 und Umlenkspiegel befindlichen Zwischenraum 72.

Das auf diese Weise die Linse 65 umströmende und am Umlenkspiegel 41 vorbeiströmende Schutzgas verläßt die Sonde durch die Austrittsöffnung 45. Dadurch wird nicht nur die Schweißstelle mit Schutzgas beblasen, sondern außerdem eine Kühlung der von den Laserstrahlen 57 und 58 beaufschlagten Abbildungselemente bewirkt. Außerdem wird durch den nach außen gerichteten Schutzgasstrom ein Niederschlag von Schweißdampf auf dem Umlenkspiegel verhindert.

Die Austrittsöffnung 45 wird im Beispiel der Figur duch eine in der Wand des Gehäuses 40 schräg nach vorne gerichtete Bohrung gebildet. Dadurch erhält das durch die Austrittsöffnung 45 strömende Schutzgas zusätzlich eine axiale Strömungskompo- nente, die ein Wegführen des Schweißdampfes aus dem Bereich der Austrittsöffnung 45 unterstützt.

Der Strömungskanal 70 ist außerdem mit einem radial abzweigenden Strömungskanal 73 verbunden, der in eine Ringnut 74 einer das Gehäuse 60 umgebenden Hülse 75 mündet. Die Hülse 75 bildet eine manschettenförmige Erweiterung der Sonde 1. Parallel zur Längsachse 10 der Sonde 1 ist die Hülse 75 mit mehreren Bohrungen 76 versehen, die eine Verbindung zur Ringnut 74 herstellen. Durch den Querkanal 73 wird von dem ausgehend von der Antriebseinheit 8 in den Strömungskanal 70 eintretenden Schutzgasstrom ein radialer Teilgasstrom abgezweigt, der in der Ringnut 74 in eine axiale Richtung umgelenkt wird und an der der Umlenkeinheit 4 zugewandten Stirnfläche der Hülse 75 in den zwischen dem Rohr 12 und dem Außenmantel der Sonde 1 befindlichen Kanal austritt. Dadurch ist die Aufrechterhaltung einer effektiven Schutzgasatmosphäre im Bereich der Schweißstelle gewährleistet. Außerdem wird der beim Aufschmelzen entstehende Schweißdampf durch die Axialströmung wirksam von der Schweißstelle abgeführt und die Gefahr, daß sich Schweißdampf im Innern der Sonde 1 niederschlägt, wird verringert.

Zum Einstellen des Mengenverhältnisses zwischen dem sich innerhalb der Sonde 1 zum Umlenkspiegel 41 hin strömenden Schutzgasstrom und dem radial nach außen abgeführten Schutzgasstrom ist die in den Strömungskanal 70 eingelegte Reduzierdüse 77 vorgesehen.

Das Gehäuse 80 der Antriebseinheit 8 ist an seinem von der Fokussiereinheit 6 abgewandten Ende zur Aufnahme eines in der Figur nicht dargestellten Schubschlauches vorgesehen, durch den das Schutzgas zur Sonde transportiert wird, und der den Lichtwellenleiter 63 und die zur elektrischen Versorgung des Elektromotors 81 erforderlichen Leitungen 82 aufnimmt.

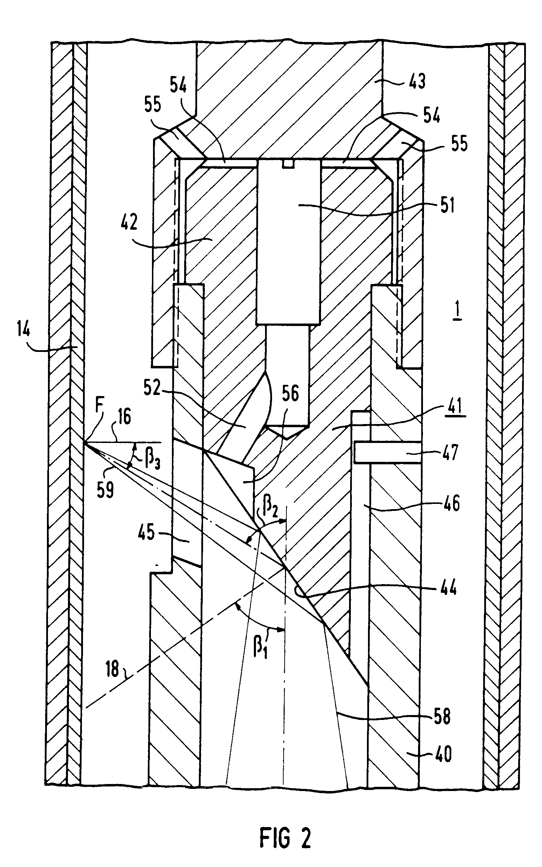

Im Ausführungsbeispiel gemäß **FIG 2** ist ein Umlenkspiegel 41 mit einer zentralen Bohrung 51 versehen, die ausgehend von der flanschartigen Erweiterung 42 in das Innere des Umlenkspiegels 41 geführt ist und durch eine schräg nach außen verlaufende und an der Spiegelfläche 44 im Bereich der Austrittsöffnung 45 in eine Ausnehmung 56 austretende Bohrung 52 verbunden ist. Die flanschartige Erweiterung 42 ist an ihrer der Überwurfmutter 43 zugewandten Stirnfläche mit mehreren radialen Nuten 54 versehen. Diese radialen Nuten 54 stellen eine Verbindung zwischen der zentralen Bohrung 51 und innerhalb der Überwurfmutter 43 schräg nach außen verlaufenden Bohrungen 55 her.

Der sich entlang dem Umlenkspiegel 41 innerhalb des Gehäuses 40 ausbreitende Schutzgasstrom wird somit vor Verlassen des Gehäuses durch die Austrittsöffnung 45 nochmals aufgespalten. Ein Teilgasstrom gelangt über die Bohrung 52 in die Bohrung 51 des Umlenkspiegels 41 und tritt über die Bohrungen 55 in der Überwurfmutter 43 aus der Sonde 1 aus. Durch diesen Gasstrom im Inneren des Umlenkspiegels 41 wird die Kühlung des Umlenkspiegels 41 verbessert und seine Lebensdauer erhöht.

Die Austrittsöffnung 45 und die Ausnehmung 56 schließen unmittelbar aneinander an, so daß ein vom strömenden Schutzgas nicht erfaßter Totraum vermieden ist. Solche Toträume zwischen Umlenkspiegel 41 und der Gehäusewand, in der die Austrittsöffnung 45 angeordnet ist, würden nämlich zu einer Verwirbelung und somit zu einer Erhöhung des Niederschlags von Schweißgut auf der Spiegelfäche 44 führen.

Der Figur ist außerdem zu entnehmen, daß das aus der Sonde 1 austretende Laserstrahlbündel 59 im Fokus F schräg zur Innenoberfläche des Rohres 14 auftrifft. Zwischen der vom Fokus F ausgehenden, senkrecht auf der Innenoberfläche des Rohres 14 stehenden Normalen 16 und dem Mittenstrahl des austretenden Laserbündels 59 ist vorzugsweise ein Winkel β3 vorgesehen, der zwischen 10° und 30° beträgt.

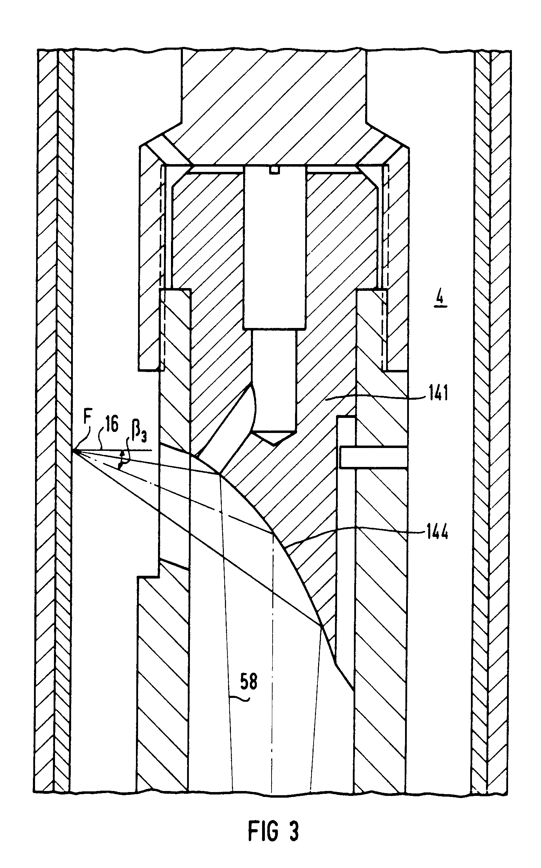

Im Ausführungsbeispiel gemäß **FIG 3** ist in der Umlenkeinheit 4 ein Umlenkspiegel 141 vorgesehen, dessen Spiegelfläche 144 konkav gekrümmt ist. Der Umlenkspiegel 141 dient in dieser Ausführungsform sowohl zum Umlenken des sich in der innerhalb der Sonde ausbreitenden Laserstrahlbündels 58 als auch zum Fokussieren dieses Laserstrahlbündels 58 auf einen außerhalb der Sonde 1 liegenden Brennpunkt F. In dieser Ausführungsform ist eine Linsenanordnung zum Fokussieren der aus dem Lichtwellenleiter austretenden Laserstrahlen nicht mehr erforderlich.

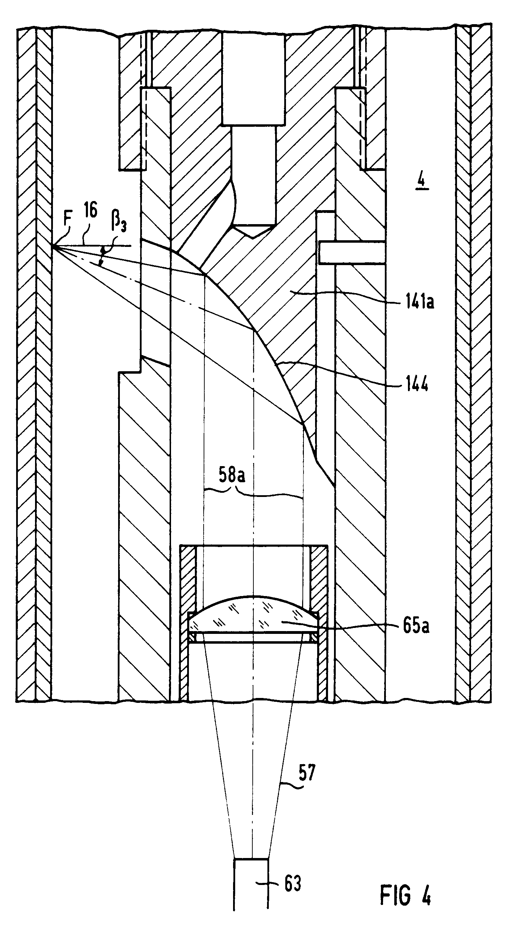

Entsprechend **FIG 4** kann einem konkaven Umlenkspiegel 141a eine Kollimatorlinse 65a vorgeschaltet sein, die ein aus dem Lichtwellenleiter 63 austretendes Laserstrahlbündel 57 zu einem parallelen Bündel 58a kollimiert, das dann vom Umlenkspiegel 141a fokussiert und umgelenkt wird. Dadurch wird bei gleicher Entfernung des Fokus F vom Umlenkspiegel 141a ein größerer Abstand zwischen dem Lichtwellenleiter 63 und dem Umlenkspiegel 141a ermöglicht.

## Patentansprüche

1. Vorrichtung zum Laserschweißen eines Rohres (12, 14) entlang seinem Innenumfang mit einer in das Rohr (12, 14) einführbaren Sonde (1), die zum Fokussieren und Umlenken eines sich innerhalb der Sonde (1) im wesentlichen entlang ihrer Längsachse (10) ausbreitenden Laserstrahlbündels (57) wenigstens ein Abbildungselement (41, 65) enthält, das ein in einem außerhalb der Sonde (1) liegenden Brennpunkt (F) fokussiertes umgelenktes Laserstrahlbündel (59) erzeugt,
**dadurch gekennzeichnet**, daß die Ausbreitungsrichtung des umgelenkten Laserstrahlbündels (59) schräg zur Längsachse (10) orientiert ist.

2. Vorrichtung nach Anspruch 1, **dadurch gekennzeichnet**, daß der Neigungswinkel (β2) des Mittenstrahls des umgelenkten Laserstrahlbündels (59) gegen die Längsachse (10) zwischen 60° und 80° beträgt.

3. Vorrichtung nach Anspruch 1, **dadurch gekennzeichnet**, daß die Sonde (1) eine Fokussiereinheit (6) mit wenigstens einer Linse (65) sowie eine Umlenkeinheit (4) mit einem Umlenkspiegel (41) mit einer ebenen Spiegelfläche (44) enthält, deren Oberflächennormale (18) gegen die Längsachse (10) der Sonde (1) einen Winkel (β1) einschließt, der größer als 45° ist.

4. Vorrichtung nach Anspruch 3, **dadurch gekennzeichnet**, daß dieser Winkel (β1) zwischen 50° und 60° beträgt.

5. Vorrichtung nach Anspruch 1 oder 2, **dadurch gekennzeichnet**, daß die Sonde (1) einen konkaven Umlenkspiegel (141) enthält, der sowohl zur Fokussierung als auch zum Umlenken des Laserstrahlbündels (57) vorgesehen ist.

6. Vorrichtung nach Anspruch 5, **dadurch gekennzeichnet**, daß bei einer über einen Lichtwellenleiter (63) mit einem Laser optisch gekoppelten Sonde (1) zwischen dem Ende (64) des Lichtwellenleiters (63) und dem konkaven Umlenkspiegel (141) Mittel zum Kollimieren des aus dem Lichtwellenleiter (63) austretenden Laserstrahlbündels (57) vorgesehen sind.

7. Vorrichtung nach einem der Ansprüche 3 bis 6, **dadurch gekennzeichnet**, daß der Umlenkspiegel (41, 141) aus einem Werkstoff mit hoher Wärmeleitfähigkeit besteht.

8. Vorrichtung nach Anspruch 7, **dadurch gekennzeichnet**, daß die Spiegeloberfläche (44, 144) des Umlenkspiegels (41 bzw. 141) mit Gold Au bedampft ist.

9. Vorrichtung nach einem der Ansprüche 1 bis 8, **dadurch gekennzeichnet**, daß zum Auskoppeln des umgelenkten Laserstrahlbündels (59) aus der Sonde (1) eine Austrittsöffnung (45) vorgesehen ist, die einem aus ihr ausströmenden Schutzgasstrom eine axial gerichtete Strömungskomponente erteilt.

10. Vorrichtung nach Anspruch 9, **dadurch gekennzeichnet**, daß Mittel vorgesehen sind, mit denen von einem sich innerhalb der Sonde (1) ausbreitenden Schutzgasstrom an der Austrittsöffnung (45) ein Teilgasstrom abgezweigt und durch innerhalb der Sonde (1) liegende Kanäle (53, 54, 55) geführt wird.

11. Vorrichtung nach Anspruch 10, **dadurch gekennzeichnet**, daß die Kanäle (53, 54, 55) in eine Ausnehmung (56) des Umlenkspiegels (41, 141) münden, die sich unmittelbar gegenüber der Austrittsöffnung (45) befindet.

12. Vorrichtung nach einem der vorhergehenden Ansprüche, **dadurch gekennzeichnet**, daß in der Sonde (1) Strömungskanäle (73, 74, 76) vorgesehen sind, mit denen ein Teil eines sich innerhalb der Sonde (1) in Richtung zum Umlenkspiegel (41, 141) strömendes Schutzgases vor Erreichen des Umlenkspiegels (41, 141) abgezweigt und mit einer axialen Strömungskomponente zur Außenoberfläche der Sonde (1) geführt wird.

13. Vorrichtung nach Anspruch 12, **dadurch gekennzeichnet**, daß innerhalb der Sonde (1) Mittel (77) zur Einstellung des Mengenverhältnisses der beiden Teilgasströme vorgesehen sind.

14. Vorrichtung nach Anspruch 13, **dadurch gekennzeichnet**, daß in einem Strömungskanal (70) für einen Teilgasstrom eine Reduzierdüse (77) vorgesehen ist.

15. Vorrichtung nach einem der Ansprüche 12 bis 14, **dadurch gekennzeichnet**, daß zur Führung des nach außen abgezweigten Teilgasstromes eine die Sonde (1) umgebende Hülse (75) vorgesehen ist, die an ihrer Innenoberfläche mit einer Ringnut (74) versehen ist, in die ein in der Sonde (1) verlaufender Strömungskanal (73) für den Teilgasstrom mündet und die mit axialen Bohrungen (76) versehen ist, die sich von der dem Kopf der Sonde (1) zugewandten Stirnfläche der Hülse (75) bis zur Ringnut (74) erstrecken.

16. Verfahren zum Laserschweißen eines Rohres (12, 14) entlang seinem Innenumfang mit einer in das Rohr (12, 14) einführbaren Sonde (1), bei dem ein sich innerhalb der Sonde im wesentlichen entlang ihrer Längsachse ausbreitendes Laserstrahlbündel (57) umgelenkt und auf eine Stelle am Innenumfang des Rohres (14) fokussiert wird, **dadurch gekennzeichnet**, daß eine schräg zur Längsachse (10) der Sonde (1) erfolgende Umlenkung des Laserstrahlbündels (57) vorgesehen ist.

17. Verfahren nach Anspruch 16, **dadurch gekennzeichnet**, daß der Schweißort mit einem Schutzgasstrom beaufschlagt wird, der eine axiale, von einer Austrittsöffnung (45) für das umgelenkte und fokussierte Laserstrahlbündel (59) weggerichtete Strömungskomponente aufweist.

18. Verfahren nach Anspruch 17, **dadurch gekennzeichnet**, daß ein Teil eines innerhalb der Sonde (1) zur Austrittsöffnung (45) strömenden Schutzgases vor Erreichen der Austrittsöffnung (45) abgezweigt und mit einer axialen Strömungskomponente in den zwischen dem Rohr (14) und der Sonde (1) befindlichen Zwischenraum geleitet wird.

19. Verfahren nach einem der Ansprüche 16 bis 18, **dadurch gekennzeichnet**, daß von dem sich innerhalb der Sonde (1) zur Austrittsöffnung (45) ausbreitenden Schutzgasstrom innerhalb der Sonde (1) an der Austrittsöffnung (45) ein weiterer Teilgasstrom mit einer axial gerichteten Strömungskomponente abgezweigt wird, der sich innerhalb der Sonde (1) ausbreitet.

20. Verfahren nach einem der Ansprüche 16 bis 19, **dadurch gekennzeichnet**, daß ein im cw-Betrieb arbeitender Festkörperlaser verwendet wird.

## Claims

1. Device for laser welding a tube (12, 14) along its inner circumference with a probe (1) which can be inserted in the tube (12, 14), which device, for the focusing and deflection of a laser beam (57) propagated within the probe (1) substantially along its longitudinal axis (10), comprises at least one projection element (41, 65) which produces a deflected laser beam (59) focused on a focal point (F) located outside the probe (1), characterised in that the direction of propagation of the deflected laser beam (59) is oriented obliquely relative to the longitudinal axis (10).

2. Device according to claim 1, characterised in that the angle of inclination (β2) of the centre beam of the deflected laser beam (59) is between 60° and 80° relative to the longitudinal axis (10).

3. Device according to claim 1, characterised in that the probe (1) comprises a focusing unit (6) having at least one lens (65) and a deflection unit (4) having a deflection mirror (41) with a flat deflection surface (44), the normal (18) of which forms an angle (β1) of more than 45° with the longitudinal axis (10) of the probe (1).

4. Device according to claim 3, characterised in that this angle (β1) is between 50° and 60°.

5. Device according to claim 1 or 2, characterised in that the probe (1) comprises a concave deflection mirror (141) which is provided for both focusing and deflecting the laser beam (57).

6. Device according to claim 5, characterised in that, in the case of a probe (1) optically coupled to a laser by way of an optical waveguide (63), means for the collimation of the laser beam (57) emerging from the optical waveguide (63) are provided between the end (64) of the optical waveguide (63) and the concave deflection mirror (141).

7. Device according to one of claims 3 to 6, characterised in that the deflection mirror (41, 141) consists of a material having high thermal conductivity.

8. Device according to claim 7, characterised in that the deflection surface (44, 144) of the deflection mirror (41 and 141, respectively) is coated with a vapour deposit of gold Au.

9. Device according to one of claims 1 to 8, characterised in that, for decoupling the deflected laser beam (59) out of the probe (1), there is provided an outlet opening (45) which imparts an axially directed component of flow to a stream of protective gas flowing out of the said outlet opening.

10. Device according to claim 9, characterised in that there are provided means by which a partial stream of gas is split off at the outlet opening (45) from a stream of protective gas propagated within the probe (1) and is guided by channels (53, 54, 55) located inside the probe (1).

11. Device according to claim 10, characterised in that the channels (53, 54, 55) open into a recess (56) in the deflection mirror (41, 141), which recess is located directly opposite the outlet opening (45).

12. Device according to one of the preceding claims, characterised in that, in the probe (1), there are provided flow channels (73, 74, 76), by means of which a portion of protective gas flowing inside the probe (1) in the direction of the deflection mirror (41, 141) is split off before reaching the deflection mirror (41, 141) and is guided towards the outer surface of the probe (1) by means of an axial component of flow.

13. Device according to claim 12, characterised in that, inside the probe (1), there are provided means (77) for adjusting the quantitative ratio of the two partial streams of gas.

14. Device according to claim 13, characterised in that a reducing nozzle (77) is provided in a flow channel (70) for a partial stream of gas.

15. Device according to one of claims 12 to 14, characterised in that, for guiding the partial stream of gas split off to the outside, there is provided a sleeve (75) which surrounds the probe (1) and which is provided on its internal surface with an annular groove (74), into which there opens a flow channel (73) running within the probe (1) for the partial stream of gas and which is provided with axial holes (76) which extend from the end of the sleeve (75) facing the head of the probe (1) to the annular groove (74).

16. Method for laser welding a tube (12, 14) along its inner circumference with a probe (1) which can be inserted in the tube (12, 14), in which method a laser beam (57) propagated within the tube substantially along its longitudinal axis, is deflected and is focused on a place on the inner circumference of the tube (14), characterised in that there is provided a deflection of the laser beam (57) which takes place obliquely relative to the longitudinal axis (10) of the probe (1).

17. Method according to claim 16, characterised in that, to the place of welding, there is applied a stream of protective gas which has an axial component of flow directed away by means of an outlet opening (45) for the deflected and focused laser beam (59).

18. Method according to claim 17, characterised in that a portion of protective gas flowing within the probe (1) towards the outlet opening (45) is split off before reaching the outlet opening (45) and is guided by means of an axial component of flow, into the interspace located between the tube (14) and the probe (1).

19. Method according to one of claims 16 to 18, characterised in that, from the stream of protective gas propagated within the probe (1) towards the outlet opening (45), within the probe (1) at the outlet opening (45) there is split off by means of an axially directed component of flow, a further partial stream of gas which is propagated within the probe (1).

20. Method according to one of claims 16 to 19, characterised in that a solid-state laser operating in the cw mode is used.

## Revendications

1. Dispositif pour le soudage laser d'un tube (12, 14) le long de son pourtour intérieur, comportant une sonde (1) qui peut être introduite dans le tube (12, 14) et qui comporte, pour la focalisation et la déviation d'un faisceau laser (57) se propageant à l'intérieur de la sonde (1) sensiblement le long de son axe longitudinal (10), au moins un élément de formation d'images (41, 65), qui produit un faisceau laser dévié (59), qui est focalisé en un foyer (F) situé à l'extérieur de la sonde (1),
caractérisé par le fait que la direction de propagation du faisceau laser dévié (59) est orientée obliquement par rapport à l'axe longitudinal (10).

2. Dispositif suivant l'une des revendications 1, caractérisé en ce que l'angle d'inclinaison (β2) du rayon central du faisceau laser dévié (59) fait en moyenne un angle compris entre 60° et 80° par rapport à l'axe longitudinal (10).

3. Dispositif suivant la revendication 1, caractérisé par le fait que la sonde (1) comporte une unité de focalisation (6) pourvue d'au moins une lentille (65) ainsi que d'une unité déviateur (4) possédant un miroir déviateur (41) présentant une surface réfléchissante plane (44), dont la normale (18) fait avec l'axe longitudinal (10) de la sonde (1), un angle (β1) supérieur à 45°.

4. Dispositif suivant la revendication 3, caractérisé par le fait que cet angle (β1) est compris entre 50° et 60°.

5. Dispositif suivant la revendication 1 ou 2, caractérisé par le fait que la sonde (1) comporte un miroir déviateur concave (41), qui est prévu aussi bien pour focaliser que pour faire dévier le faisceau laser (57).

6. Dispositif suivant la revendication 5, caractérisé par le fait que dans le cas d'une sonde (1) couplée optiquement à un laser par l'intermédiaire d'un guide d'ondes lumineuses (63), entre l'extrémité (64) du guide d'ondes lumineuses (63) et le miroir déviateur concave (141), il est prévu des moyens pour collimater le faisceau laser (57) qui sort du guide d'ondes lumineuses (63).

7. Dispositif suivant l'une des revendications 3 à 6, caractérisé par le fait que le miroir déviateur (41, 141) est constitué par un matériau possèdant une haute conductibilité thermique.

8. Dispositif suivant la revendication 7, caractérisé par le fait que la surface réfléchissante (44, 144) du miroir déviateur (41 ou 141) est recouverte d'un dépôt d'or Au formé par dépôt par évaporation.

9. Dispositif suivant l'une des revendications 1 à 18, caractérisé par le fait que pour le découplage du faisceau laser dévié (59) à partir de la sonde (1), il est prévu une ouverture de sortie (45), qui imprime une composante d'écoulement dirigée axialement, à un courant de gaz protecteur sortant par cette ouverture.

10. Dispositif suivant la revendication 9, caractérisé en ce qu'il est prévu des moyens, à l'aide desquels un courant de gaz partiel est dérivé d'un courant de gaz protecteur se propageant à l'intérieur de la sonde (1), ce courant de gaz partiel étant guidé dans des canaux (53, 54, 55) situés à l'intérieur de la sonde (1).

11. Dispositif suivant la revendication 10, caractérisé en ce que les canaux (53, 54, 55) débouchent dans un évidement (56) du miroir déviateur (41, 141), qui est situé directement en vis-à-vis de l'ouverture de sortie (45).

12. Dispositif suivant l'une des revendications précédentes, caractérisé par le fait que dans la sonde (1) il est prévu des canaux d'écoulement (73, 74, 76), au moyen desquels une partie d'un gaz protecteur, qui circule à l'intérieur de la sonde (1) en direction du miroir déviateur (41, 141), est dérivée avant d'atteindre le miroir déviateur (41, 141) et est dirigée vers la surface extérieure de la sonde (1) avec une composante axiale d'écoulement.

13. Dispositif suivant la revendication 12, caractérisé par le fait qu'à l'intérieur de la sonde (1), il est prévu des moyens (77) pour régler le rapport quantitatif des deux courants de gaz partiels.

14. Dispositif suivant la revendication 13, caractérisé par le fait qu'une buse réductrice (77) est prévue dans un canal d'écoulement (70) pour un courant de gaz partiel.

15. Dispositif suivant l'une des revendications 12 à 14, caractérisé par le fait que pour le guidage du courant de gaz partiel dérivé vers l'extérieur, il est prévu une douille (75) qui entoure la sonde (1) et comporte, dans sa surface intérieure, une gorge annulaire (74), dans laquelle débouche un canal d'écoulement (73), qui s'étend dans la sonde (1) pour le courant de gaz partiel et qui comporte des perçages axiaux (76), qui s'étendent depuis la surface frontale de la douille (75), tournée vers la tête de la sonde (1), jusqu'à la gorge annulaire (74).

16. Procédé pour le soudage laser d'un tube (12, 14) le long de son pourtour intérieur à l'aide d'une sonde (1) pouvant être insérée dans le tube (12, 14), selon lequel on fait dévier un faisceau laser (57) se propageant à l'intérieur de la sonde sensiblement le long de son axe longitudinal et on le focalise en un emplacement situé sur le pourtour intérieur du tube (14), caractérisé par le fait qu'il est prévu une déviation du faisceau laser (57), qui s'effectue obliquement par rapport à l'axe longitudinal (10) de la sonde (1).

17. Procédé suivant la revendication 16, caractérisé par le fait que l'emplacement de soudage est chargé par un courant de gaz protecteur, qui possède une composante axiale d'écoulement, qui s'étend à partir d'une ouverture de sortie (45) pour le faisceau laser dévié et focalisé (59).

18. Procédé suivant la revendication 17, caractérisé par le fait qu'une partie d'un gaz protecteur, qui circule à l'intérieur de la sonde (1) en direction de l'ouverture de sortie (45), est dirigée avant d'atteindre l'ouverture de sortie (45) et est déviée avec une composante axiale d'écoulement, dans l'espace intercalaire situé entre le tube (14) et la sonde (1).

19. Procédé suivant l'une revendications 16 à 18, caractérisé par le fait qu'un autre courant de gaz partiel possédant une composante d'écoulement dirigée axialement et qui se propage à l'intérieur de la sonde (1), est dérivé à l'intérieur de la sonde (1), au niveau de l'ouverture de sortie (45), à partir du courant de gaz protecteur qui se propage à l'intérieur de la sonde (1) en direction de l'ouverture de sortie (45).

20. Procédé suivant l'une des revendications 16 à 19, caractérisé par le fait qu'on utilise un laser à corps solide travaillant en continu.
